# EUROPÄISCHE PATENTSCHRIFT

(11) **EP 3 304 718 B1**
(45) Veröffentlichungstag und Bekanntmachung des Hinweises auf die Patenterteilung: **12.08.2020**
(21) Anmeldenummer: 15726138.9
(22) Anmeldetag: 29.05.2015
(51) Int. Cl.: H02M 3/335, H02M 3/155

(54) **GLEICHSPANNUNGSWANDLER FÜR HOHE SPANNUNGEN**
DC-TO-DC CONVERTER FOR HIGH VOLTAGES
CONVERTISSEUR CONTINU-CONTINU POUR HAUTES TENSIONS

(43) Veröffentlichungstag der Anmeldung: 11.04.2018
(73) Patentinhaber: Siemens Aktiengesellschaft, 80333 München (DE)
(72) Erfinder: KNAAK, Hans-Joachim, 91054 Erlangen (DE); SCHÖN, Andre, 91058 Erlangen (DE); BAKRAN, Mark-Matthias, 91052 Erlangen (DE)
(86) Internationale Anmeldenummer: PCT/EP2015/062006
(87) Internationale Veröffentlichungsnummer: WO 2016/192758

(56) Entgegenhaltungen:
- WO-A1-2013/149633
- WO-A1-2014/056540

## Beschreibung

Die Erfindung betrifft einen Gleichspannungswandler mit einem ersten Teilumrichter und einem zweiten Teilumrichter, die miteinander unter Ausbildung einer Umrichterreihenschaltung in Reihe geschaltet sind, wobei die Umrichterreihenschaltung sich zwischen einem ersten und einem zweiten oberspannungsseitigen Gleichspannungspol erstreckt und der zweite Teilumrichter sich zwischen einem ersten und einem zweiten unterspannungsseitigen Gleichspannungspol erstreckt, wobei ein Wechselspannungsanschluss des ersten Teilumrichters und ein Wechselspannungsanschluss des zweiten Teilumrichters über eine Kopplungseinrichtung verbunden sind.

Gleichspannungswandler finden beispielsweise in der Kopplung von Gleichspannungsnetzen unterschiedlicher Spannungsniveaus Anwendung. Insbesondere zur Kopplung von Hochspannungsgleichstromübertragungsstrecken werden Gleichspannungswandler benötigt. Die hierbei zu transformierende Leistung kann bis zu mehreren 1000 MW erreichen. Für solche Anwendungen können weder die aus der Hochspannungswechselstromübertragung noch die aus der Mittelspannungstechnik bekannten Lösungen verwendet werden.

Ein Gleichspannungswandler der eingangs genannten Art ist aus der WO 2014/056540 A1 bekannt. Bei dem bekannten Gleichspannungswandler umfasst die Kopplungseinrichtung einen Transformator, der die beiden Wechselspannungsanschlüsse der Teilumrichter miteinander verbindet. Auf diese Weise stellt die Kopplungseinrichtung des bekannten Gleichspannungswandlers eine induktive Kopplung der Teilumrichter bereit. Demnach wird zwischen der beiden Teilumrichtern eine elektrische Leistung mittels elektromagnetischer Induktion übertragen. Nachteilig bei dem bekannten Gleichspannungswandler sind die relativ hohen Kosten des in der Kopplungseinrichtung eingesetzten Transformators.

Aus der WO 2013/149633 A1 ist ein DC-DC-AC-Umrichter mit zwei in Reihe geschalteten Teilumrichtern bekannt, deren Wechselspannungsanschlüsse über einen Kondensator miteinander verbunden sind.

Auch bei der vorliegenden Erfindung stellt die Kopplungseinrichtung eine rein kapazitive Kopplung der Teilumrichter bereit.

Mit anderen Worten findet der Leistungsaustausch zwischen den Teilumrichtern lediglich aufgrund einer elektrischen Kapazität statt, die von der Kopplungseinrichtung bereitgestellt ist.

Wie in WO 2013/149633 A1 ist der Leistungsaustausch zwischen den beiden Teilumrichtern, der über einen Kreis-Wechselstrom stattfindet, der durch die Kopplungseinrichtung und die beiden Teilumrichter fließt, mittels einer rein kapazitiven Kopplung, geeigneterweise über eine Koppelkapazität, erreichbar. Allerdings ist dies nicht ohne weitere technische Überlegung durchführbar. Zu beachten ist insbesondere, dass aufgrund des Wegfalls der induktiven Spannungsübersetzung die Amplitude des Kreis-Wechselstromes im Allgemeinen nicht frei wählbar ist. Vielmehr hängt diese bei dem erfindungsgemäßen Gleichspannungswandler insbesondere von einem Übersetzungsverhältnis Ü des Gleichspannungswandlers ab. Daher muss die Amplitude des Kreis-Wechselstromes zur Erreichung eines möglichst effizienten Leistungsaustausches für jede Ausführung des Gleichspannungswandlers eigens bestimmt werden. Das Übersetzungsverhältnis Ü ist dabei als das Verhältnis einer an den oberspannungsseitigen Gleichspannungspolen abfallenden Spannung UDC zu einer den unterspannungsseitigen Gleichspannungspolen abfallenden Spannung UDC2 definiert, Ü = UDC/UDC2.

Die Kopplungseinrichtung kann damit insbesondere transformatorlos ausgebildet sein. Da die Kosten einer Koppelkapazität meist niedriger sind als diejenigen eines Transformators, kann auf diese Weise ein Kostenvorteil erzielt werden. Gemäß der Erfindung umfasst die Kopplungseinrichtung wenigstens eine Reihenschaltung zweipoliger Kopplungsmodule, wobei jedes Kopplungsmodul wenigstens einen Leistungshalbleiterschalter und einen Kondensator umfasst. Die kapazitive Kopplung der Teilumrichter ist gemäß dieser Ausführungsform in Form von Kondensatoren realisiert, die in die Kopplungsmodule integriert sind. Mittels einer Steuerungseinrichtung zur Ansteuerung der Leistungshalbleiterschalter können die Kondensatoren der Kopplungsmodule zugeschaltet oder überbrückt werden, so dass eine besonders flexible Kopplung erreichbar ist. Geeigneterweise sind die Leistungshalbleiterschalter der Kopplungsmodule ein- und abschaltbare Leistungshalbleiterschalter, wie beispielsweise IGBTs (Insulated Gate-Bipolar Transistor) oder IGCTs (Integrated Gate-Commutated Thyristor) .

Bevorzugt sind die Kopplungsmodule als Halbbrückenschaltungen realisiert. Eine solche Halbbrückenschaltung ist beispielsweise in der DE 101 03 031 B4 beschrieben. Eine Halbbrückenschaltung weist eine Reihenschaltung von zwei Leistungshalbleiterschalteinheiten mit gleicher Durchlassrichtung auf, wobei jede Leistungshalbleiterschalteinheit wenigstens einen ein- und abschaltbaren Leistungshalbleiterschalter aufweist. Ferner umfasst die Halbbrückenschaltung einen kapazitiven Energiespeicher, beispielsweise einen Leistungskondensator, der parallel zu der Reihenschaltung der Leistungshalbleiterschalteinheiten angeordnet ist. Die Halbbrückenschaltung verfügt über zwei Anschlüsse beziehungsweise Klemmen, wobei ein erster Anschluss mit einer der Leistungshalbleiterschalteinheiten und mit dem Energiespeicher verbunden ist und der andere an einem Potenzialpunkt zwischen den Leistungshalbleiterschalteinheiten angeordnet ist. Aufgrund der verhältnismäßig kleinen Verluste sind solche Kopplungsmodule besonders kostengünstig im Betrieb.

Die Kopplungsmodule können jedoch auch als Vollbrückenschaltungen oder andere geeignete Schaltungen, wie beispielsweise sogenannte Double-Clamp-Module realisiert sein. Es ist selbstverständlich auch denkbar, dass nicht alle Kopplungsmodule gleichartig aufgebaut sind. Vielmehr können beispielsweise einige der Kopplungsmodule als Halbbrückenschaltungen, andere als Vollbrückenschaltungen ausgebildet sein.

Gemäß einer Ausführungsform der Erfindung umfasst der Gleichspannungswandler ferner einen Parallelzweig, der sich zwischen dem ersten und dem zweiten oberspannungsseitigen Gleichspannungspol parallel zu der Umrichterreihenschaltung erstreckt, und in dem ein Kondensator angeordnet ist. Der Parallelzweig bildet unter Einbeziehung der Umrichterreihenschaltung beziehungsweise der einzelnen Teilumrichter einen zusätzlichen geschlossenen Strompfad für einen weiteren Kreis-Wechselstrom aus. Auf diese Weise können unerwünschte Wechselstromanteile in den durch die Gleichspannungspole fließenden Gleichströmen minimiert werden. Der Parallelzweig kann zudem beispielsweise eine in Reihe zum Kondensator angeordnete Induktivität umfassen, so dass insgesamt ein sogenannter Saugkreis gebildet ist, der beispielsweise auf die Frequenz des Kreis-Wechselstromes abgestimmt ist.

Gemäß einer vorteilhaften Weiterbildung weist der Parallelzweig eine Reihenschaltung zweipoliger Konvertermodule auf, die jeweils wenigstens einen Halbleiterschalter und einen Kondensator umfassen. Die Konvertermodule können beispielsweise als zuvor beschriebene Halbbrückenschaltungen realisiert sein. Sie können zu den Kopplungsmodulen gleichartig aufgebaut sein.

Gemäß einer bevorzugten Ausführungsform der Erfindung weist der erste Teilumrichter wenigstens eine erste Umrichterphase auf, wobei die erste Umrichterphase des ersten Teilumrichters einen ersten Phasenzweig und einen zweiten Phasenzweig umfasst, wobei der erste Phasenzweig des ersten Teilumrichters sich zwischen dem ersten oberspannungsseitigen Gleichspannungspol und dem Wechselspannungsanschluss des ersten Teilumrichters erstreckt, und der zweite Phasenzweig des ersten Teilumrichters sich zwischen dem Wechselspannungsanschluss des ersten Teilumrichters und dem ersten unterspannungsseitigen Gleichspannungspol erstreckt, und wobei der zweite Teilumrichter wenigstens eine erste Umrichterphase aufweist, wobei die erste Umrichterphase des zweiten Teilumrichters einen ersten Phasenzweig und einen zweiten Phasenzweig umfasst, wobei der erste Phasenzweig des zweiten Teilumrichters sich zwischen dem ersten unterspannungsseitigen Gleichspannungspol und dem Wechselspannungsanschluss des zweiten Teilumrichters erstreckt, und der zweite Phasenzweig des zweiten Teilumrichters sich zwischen dem Wechselspannungsanschluss des zweiten Teilumrichters und dem zweiten unterspannungsseitigen Gleichspannungspol erstreckt.

Gemäß einer Ausführungsform der Erfindung ist der Gleichspannungswandler zweiphasig aufgebaut. Der Wechselspannungsanschluss des ersten Teilumrichters ist demnach ein erster Wechselspannungsanschluss des ersten Teilumrichters und der Wechselspannungsanschluss des zweiten Teilumrichters ist ein erster Wechselspannungsanschluss des zweiten Teilumrichters, wobei der erste Teilumrichter ferner eine zweite Umrichter-phase aufweist, wobei die zweite Umrichterphase des ersten Teilumrichters einen dritten Phasenzweig und einen vierten Phasenzweig umfasst, wobei der dritte Phasenzweig des ersten Teilumrichters sich zwischen dem ersten oberspannungsseitigen Gleichspannungspol und einem zweiten Wechselspannungsanschluss des ersten Teilumrichters erstreckt, und der vierte Phasenzweig des ersten Teilumrichters sich zwischen dem zweiten Wechselspannungsanschluss des ersten Teilumrichters und dem ersten unterspannungsseitigen Gleichspannungspol erstreckt, und wobei der zweite Teilumrichter eine zweite Umrichterphase aufweist, wobei die zweite Umrichterphase des zweiten Teilumrichters einen dritten Phasenzweig und einen vierten Phasenzweig umfasst, wobei der dritte Phasenzweig des zweiten Teilumrichters sich zwischen dem ersten unterspannungsseitigen Gleichspannungspol und einem zweiten Wechselspannungsanschluss des zweiten Teilumrichters erstreckt, und der vierte Phasenzweig des zweiten Teilumrichters sich zwischen dem zweiten Wechselspannungsanschluss des zweiten Teilumrichters und dem zweiten unterspannungsseitigen Gleichspannungspol erstreckt, wobei die Kopplungseinrichtung einen zweiten Verbindungszweig mit einer weiteren Reihenschaltung der Kopplungsmodule umfasst, der den zweiten Wechselspannungsanschluss des ersten Teilumrichters mit dem zweiten Wechselspannungsanschluss des zweiten Teilumrichters verbindet. Diese Ausführungsform kann ferner auf einfache Weise zu einer dreiphasigen Ausführung erweitert werden. Dabei umfassen der erste und der zweite Teilumrichter jeweils eine parallel zu der ersten Umrichter-phase angeordnete dritte Umrichterphase, die zur ersten Umrichterphase jeweils gleichartig aufgebaut ist. Ein dritter Wechselspannungsanschluss des ersten Teilumrichters ist über einen dritten Verbindungszweig, der zum ersten Verbindungszweig gleichartig aufgebaut ist, mit einem dritten Wechselspannungsanschluss des zweiten Teilumrichters verbunden.

Gemäß einer Ausführungsform der Erfindung sind der erste und/oder der zweite Teilumrichter modulare Mehrstufenumrichter (MMC). Dazu weisen die Phasenzweige der Teilumrichter jeweils eine Reihenschaltung zweipoliger Submodule auf, wobei jedes Submodul ein- und abschaltbare Leistungshalbleiterschalter sowie einen Energiespeicher, bevorzugt in Form eines Kondensators, umfasst.

Ferner ist jedes der Submodule geeigneterweise einzeln ansteuerbar. Eine an dem Phasenzweig abfallende Spannung ist dann gleich der Summe von Spannungen, die an den zugehörigen Submodulen abfallen. Mittels des MMC ist eine besonders vorteilhafte stufenförmige Konverterspannung an dessen Wechselspannungsanschluss erzeugbar. Ein MMC ist beispielsweise in der DE 101 03 031 B4 beschrieben.

Bevorzugt sind die Submodule als Halbbrückenschaltungen oder als Vollbrückenschaltungen ausgebildet. Der MMC kann auch unterschiedlich ausgebildete Submodule umfassen, so dass nicht alle Submodule des MMC gleichartig aufgebaut sind. Im Betrieb des Gleichspannungswandlers wird von den Submodulen in jeder der Umrichterphasen der beiden Teilumrichter eine Phasenspannung erzeugt, die eine Überlagerung einer Gleichspannung und einer Wechselspannung ist. Wird beispielsweise die oberspannungsseitige Gleichspannung, das heißt die an den oberseitigen Gleichspannungspolen abfallende Spannung, mit UDC bezeichnet, so kann diese gleich einer Summe zweier Gleichspannungen dargestellt werden: UDC = UDC1 + UDC2, wobei UDC2 die an den unterspannungsseitigen Gleichspannungspolen abfallende Spannung bezeichnet. Am ersten Teilumrichter wird mittels eines geeigneten, dem Fachmann bekannten Steuerungsverfahrens eine Spannung erzeugt, die gleich UDC1 + UAC ist, wobei mit UAC der Wechselspannungsanteil der Konverterspannung bezeichnet wird. Die Wechselspannung UAC erzeugt den Kreis-Wechselstrom, der in dem durch die Kopplungseinrichtung unter Einbeziehung der Phasenzweige gebildeten geschlossenen Strompfad zwischen den Teilumrichtern fließt und einen Austausch elektrischer Leistung zwischen ihnen bewirkt. Entsprechend wird am zweiten Teilumrichter eine Konverterspannung UDC2 - UAC erzeugt.

Zweckmäßigerweise kann dem ersten Teilumrichter ein Modulationsindex M1 zugeordnet werden, der sich als das Verhältnis des Wechselspannungsanteils UAC der Konverterspannung zu UDC1 definiert: M1 = UAC/UDC1. Entsprechend ist ein dem zweiten Teilumrichter zugeordneter Modulationsindex M2 durch die Gleichung M2 = UAC/UDC2 definiert. Je nach Bauart der Teilumrichter existiert ein maximaler Modulationsindex Mmax für jeden Teilumrichter, bei dem die Möglichkeit der Leistungsübertragung optimal ausgeschöpft wird. Bei einem Teilumrichter, der mit einer Reihenschaltung von Halbbrücken aufgebaut ist, beträgt der maximale Modulationsindex Mmax etwa 1/2. Bei einem mit einer Reihenschaltung von Vollbrücken aufgebauten Teilumrichter beträgt Mmax ca. 0,625. Näherungsweise ist Mmax proportional zu höchsten an einem gegebenen Teilumrichter erzeugbaren Wechselspannung UAC, wobei weitere technische, dem Fachmann bei Kenntnis des Umrichteraufbaus bekannte Faktoren berücksichtigt werden müssen.

Die Modulationsindizes der beiden Teilumrichter hängen über das Übersetzungsverhältnis Ü des Gleichspannungswandlers zwischen der oberspannungsseitigen Gleichspannung und der unterseitigen Gleichspannung voneinander ab. Mit den Bezeichnungen M1 = UAC/UDC1 und M2 = UAC/UDC2 gilt: M2/M1 = (UDC - UDC2)/UDC2 = Ü - 1, also M2 = (Ü - 1) ^{∗} M1. Im Allgemeinen können bei dem erfindungsgemäßen Gleichspannungswandler daher nicht beide Teilumrichter einen Modulationsindex aufweisen, der dem maximalen Modulationsindex des jeweiligen Teilumrichters entspricht.

Zur weiteren Erörterung der Zusammenhänge wird bei der Angabe von Zahlenbeispielen der Einfachheit wegen davon ausgegangen, dass die beiden Teilumrichter gleiche Bauart aufweisen, so dass der maximale Modulationsindex Mmax für beide Teilumrichter gleich ist. In allen anderen Fällen ist entsprechend vorzugehen.

Es kann von Vorteil sein, wenn dem ersten Teilumrichter ein Modulationsindex zugeordnet ist, der einem maximalen Modulationsindex des ersten Teilumrichters entspricht. Beispielsweise bei einem Übersetzungsverhältnis von Ü < 2 gilt, dass, falls M1 = Mmax, dann M2 = M1 ^{∗} (Ü - 1) < Mmax. Die Zuordnung M2 = Mmax ist jedoch nicht sinnvoll, da in diesem Fall M1 > Mmax gelten müsste, was im Allgemeinen technisch nicht realisierbar ist.

Es kann ferner auch von Vorteil sein, wenn dem zweiten Teilumrichter ein Modulationsindex zugeordnet ist, der einem maximalen Modulationsindex des zweiten Teilumrichters entspricht. Beispielsweise bei einem Übersetzungsverhältnis von Ü > 2 gilt, dass, falls M2 = Mmax, dann M1 < Mmax. Die Zuordnung M1 = Mmax ist jedoch nicht sinnvoll, da in diesem Fall M2 > Mmax gelten müsste, was im Allgemeinen technisch wiederum nicht realisierbar ist.

Gemäß einer bevorzugten Ausführungsform der Erfindung ist Ü = 2. In diesem Fall gilt, dass M1 = M2 = Mmax. Demnach können beide Teilumrichter den maximalen Modulationsindex aufweisen.

Zu beachten ist dabei, dass der entsprechende Vorteil im Wesentlichen auch bei Übersetzungsverhältnissen nahe bei zwei erreicht werden kann, beispielsweise mit 1,8 <= Ü <= 2,2.

Zu beachten ist ferner, dass es durchaus, abhängig von der Topologie des beiden Teilumrichter weitere bevorzugte Übersetzungsverhältnisse geben kann, die von dem Wert zwei abweichen, beispielsweise, wenn einer der beiden Teilumrichter Submodule mit Halbbrückenschaltungen und der andere Teilumrichter Submodule mit Vollbrückenschaltungen aufweisen.

Die Erfindung soll im Folgenden anhand der in den Figuren 1 bis 10 dargestellten Ausführungsbeispiele weiter erörtert werden.
- Figur 1: zeigt ein erstes Ausführungsbeispiel eines nicht erfindungsgemäßen Gleichspannungswandlers in schematischer Darstellung;
- Figur 2: zeigt ein zweites Ausführungsbeispiel eines nicht erfindungsgemäßen Gleichspannungswandlers in schematischer Darstellung;
- Figur 3: zeigt ein drittes Ausführungsbeispiel eines nicht erfindungsgemäßen Gleichspannungswandlers in schematischer Darstellung;
- Figur 4: zeigt ein erstes Ausführungsbeispiel eines erfindungsgemäßen Gleichspannungswandlers in schematischer Darstellung;
- Figur 5: zeigt ein zweites Ausführungsbeispiel eines erfindungsgemäßen Gleichspannungswandlers in schematischer Darstellung;
- Figur 6: zeigt ein drittes Ausführungsbeispiel eines erfindungsgemäßen Gleichspannungswandlers in schematischer Darstellung;
- Figur 7: zeigt ein viertes Ausführungsbeispiel eines erfindungsgemäßen Gleichspannungswandlers in schematischer Darstellung;
- Figuren 8 - 10: zeigen Beispiele von Submodulen zu den Ausführungsbeispielen der Figuren 1 - 7.

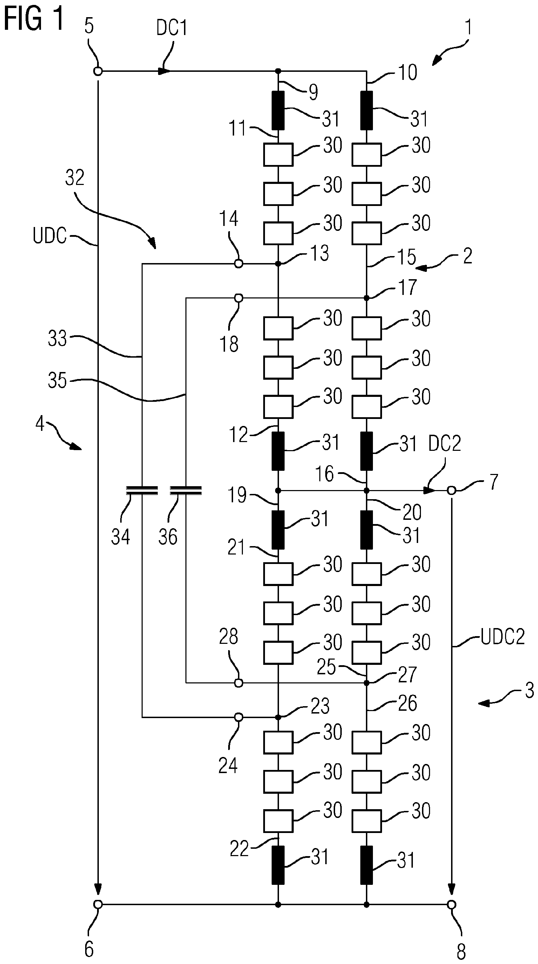

In Figur 1 ist im Einzelnen ein Ausführungsbeispiel eines Gleichspannungswandlers dargestellt. Der Gleichspannungswandler 1 umfasst einen ersten Teilumrichter 2 und einen zweiten Teilumrichter 3. Der erste Teilumrichter 2 und der zweite Teilumrichter 3 sind unter Ausbildung einer Umrichterreihenschaltung 4 miteinander verbunden. Die Umrich-terreihenschaltung 4 erstreckt sich zwischen einem ersten oberspannungsseitigen Gleichspannungspol 5 und einem zweiten oberspannungsseitigen Gleichspannungspol 6. Der zweite Teilumrichter 3 erstreckt sich zwischen einem ersten unterspannungsseitigen Gleichspannungspol 7 und einem zweiten unterspannungsseitigen Gleichspannungspol 8. Die beiden oberspannungsseitigen Gleichspannungspole 5 und 6 dienen dazu, den Gleichspannungswandler 1 mit einer oberspannungsseitigen Gleichspannungsleitung (in Figur nicht dargestellt) zu verbinden. Die unterspannungsseitigen Gleichspannungspole 7, 8 sind dazu eingerichtet, den Gleichspannungswandler 1 mit einer in Figur 1 nicht dargestellten unterspannungsseitigen Gleichspannungsleitung zu verbinden. An den oberspannungsseitigen Gleichspannungspolen 5, 6 fällt eine oberspannungsseitige Gleichspannung UDC ab. An den unterspannungsseitigen Gleichspannungspolen 7, 8 fällt eine unterspannungsseitige Gleichspannung UDC2 ab. Der erste Teilumrichter 2 weist eine erste Umrichterphase 9 und eine zweite Umrichterphase 10 auf. Die erste Umrichterphase 9 des ersten Teilumrichters 2 umfasst einen ersten Phasenzweig 11 sowie einen zweiten Phasenzweig 12. Der erste Phasenzweig 11 und der zweite Phasenzweig 12 sind miteinander in einem Potenzialpunkt 13 verbunden. Am Potenzialpunkt 13 ist ein erster Wechselspannungsanschluss 14 des ersten Teilumrichters 2 ausgebildet. Die zweite Umrichterphase 10 des ersten Teilumrichters 2 weist einen dritten Phasenzweig 15 sowie einen vierten Phasenzweig 16 auf. Der dritte Phasenzweig 15 und der vierte Phasenzweig 16 sind in einem Potenzialpunkt 17 miteinander verbunden. Am Potenzialpunkt 17 ist ein zweiter Wechselspannungsanschluss 18 des ersten Teilumrichters ausgebildet.

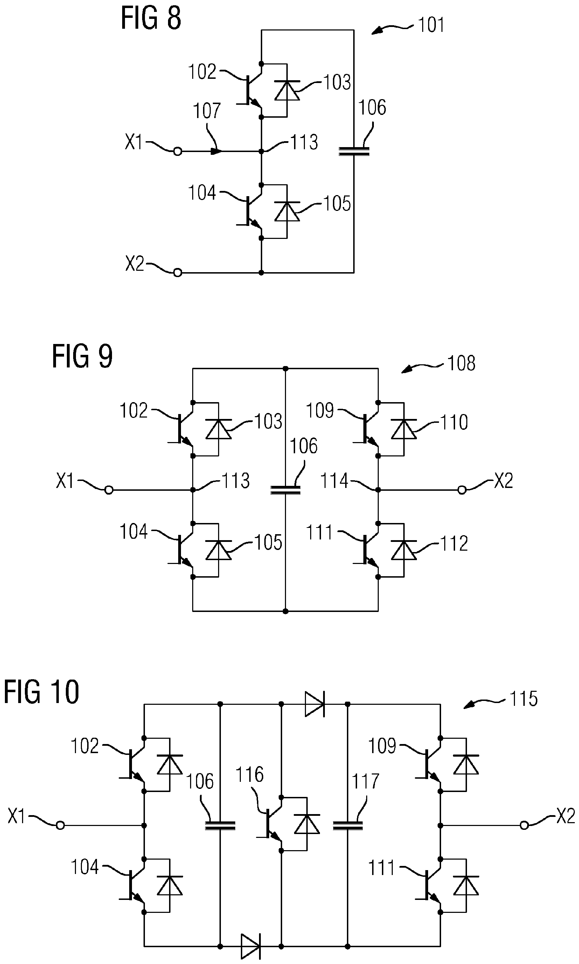

Dementsprechend umfasst der zweite Teilumrichter 3 eine erste Umrichterphase 19 und eine zweite Umrichterphase 20. Die erste Umrichterphase 19 weist einen ersten Phasenzweig 21 sowie einen zweiten Phasenzweig 22 auf. Der erste Phasenzweig 21 und der zweite Phasenzweig 22 des zweiten Teilumrichters 3 sind in einem Potenzialpunkt 23 miteinander verbunden. Am Potenzialpunkt 23 ist ein erster Wechselspannungsanschluss 24 des zweiten Teilumrichters 3 ausgebildet. Die zweite Umrichterphase 20 des zweiten Teilumrichters 3 weist einen dritten Phasenzweig 25 sowie einen vierten Phasenzweig 26 auf. Der dritte Phasenzweig 25 und der vierte Phasenzweig 26 sind miteinander in einem Potenzialpunkt 27 verbunden. Am Potenzialpunkt 27 ist ein zweiter Wechselspannungsanschluss 28 des zweiten Teilumrichters 3 ausgebildet. Alle Phasenzweige 11, 12, 15, 16, 19, 20, 22, 26 weisen jeweils eine Reihenschaltung zweipoliger Submodule 30 sowie eine zu der Reihenschaltung der Submodule 30 in Reihe angeordnete Drosselspule 31 auf. In dem in Figur 1 dargestellten Ausführungsbeispiel des Gleichspannungswandlers 1 sind alle Submodule 30 des Gleichspannungswandlers 1 gleichartig aufgebaut. Ebenso sind alle Drosselspulen 31 gleichartig aufgebaut. Die Submodule 30 haben gemäß dem in Figur 1 dargestellten Ausführungsbeispiel einen Aufbau gemäß einer der in den Figuren 8 - 10 gezeigten Ausführungen.

Der Gleichspannungswandler 1 umfasst ferner eine Kopplungseinrichtung 32. Die Kopplungseinrichtung 32 umfasst einen ersten Verbindungszweig 33, der sich zwischen dem ersten Wechselspannungsanschluss 14 des ersten Teilumrichters und dem ersten Wechselspannungsanschluss 24 des zweiten Teilumrichters 3 erstreckt. In dem ersten Verbindungszweig 33 ist ein Kondensator 34 angeordnet. Die Kopplungseinrichtung 32 umfasst ferner einen zweiten Verbindungszweig 35, der sich zwischen dem zweiten Wechselspannungsanschluss 18 des ersten Teilumrichters und dem zweiten Wechselspannungsanschluss 28 des zweiten Teilumrichters 3 erstreckt. Im zweiten Verbindungszweig 35 ist ein Kondensator 36 angeordnet. Es ist darauf hinzuweisen, dass anstelle des in Figur 1 dargestellten einzelnen Kondensators 34 beziehungsweise 36 auch eine Reihenschaltung von mehreren Kondensatoren eingesetzt werden kann. Ebenso ist anzumerken, dass obwohl in Figur 1 in jeder Reihenschaltung von Submodulen 30 lediglich drei Submodule 30 grafisch dargestellt sind, eine beliebige, dem jeweiligen Anwendungsfall angepasste Anzahl von Submodulen 30 verwendet werden kann.

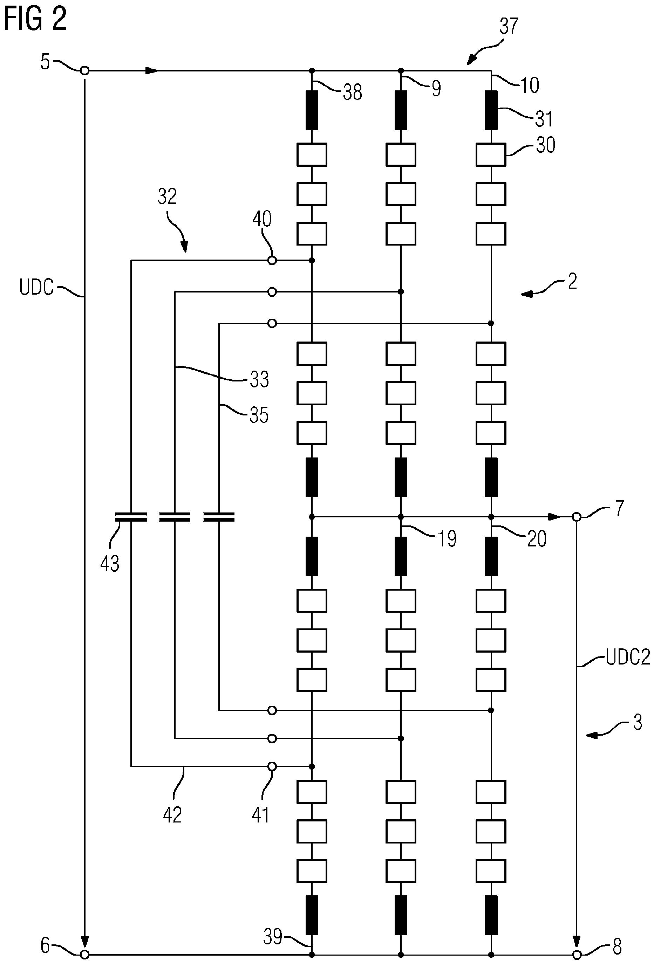

In den nachfolgenden Figuren 2 - 7 sind weitere Ausführungsbeispiele des Gleichspannungswandlers dargestellt. Dabei sind gleiche und gleichartige Elemente der Schaltung mit gleichen Bezugszeichen versehen. Aus Gründen der Übersichtlichkeit wird daher im Folgenden lediglich auf die Unterschiede zwischen den einzelnen Ausführungsbeispielen näher eingegangen.

Figur 2 zeigt ein zweites Ausführungsbeispiel eines Gleichspannungswandlers 37. Der Gleichspannungswandler 37 gleicht in seinem Aufbau und seiner Funktionsweise im Wesentlichen dem Gleichspannungswandler 1 der Figur 1. Im Unterschied zum Gleichspannungswandler 1 der Figur 1 ist der Gleichspannungswandler 37 jedoch dreiphasig ausgebildet. Demnach umfasst der Gleichspannungswandler 37 eine dritte Umrichterphase 38 des ersten Teilumrichters 2 sowie eine dritte Umrichterphase 39 des zweiten Teilumrichters 3. Die dritte Umrichterphase 38 des ersten Teilumrichters 2 erstreckt sich parallel zu der ersten Umrichterphase 9 des ersten Teilumrichters 2 zwischen dem ersten oberspannungsseitigen Gleichspannungspol 5 und dem ersten unterspannungsseitigen Gleichspannungspol 7. Die dritte Umrichterphase 39 des zweiten Teilumrichters 3 erstreckt sich zwischen dem ersten unterspannungsseitigen Gleichspannungspol 7 und dem zweiten unterspannungsseitigen Gleichspannungspol 8 parallel zu der ersten Umrichterphase 19 des zweiten Teilumrichters 3. Die dritte Umrichterphase 38 des ersten Teilumrichters 2 ist gleichartig zur ersten Umrichterphase 9 des ersten Teilumrichters 2 ausgebildet, so dass der erste Teilumrichter 2 einen dritten Wechselspannungsanschluss 40 umfasst, der entsprechend mit einem dritten Wechselspannungsanschluss 41 des zweiten Teilumrichters 3 über die Kopplungseinrichtung 32 verbunden ist. Die Verbindung zwischen dem dritten Wechselspannungsanschluss 40 und des ersten Teilumrichters 2 und dem dritten Wechselspannungsanschluss 41 des zweiten Teilumrichters 3 erfolgt mittels eines dritten Verbindungszweiges 42 der Kopplungseinrichtung 32, wobei im dritten Verbindungszweig 42 ein Kondensator 43 angeordnet ist.

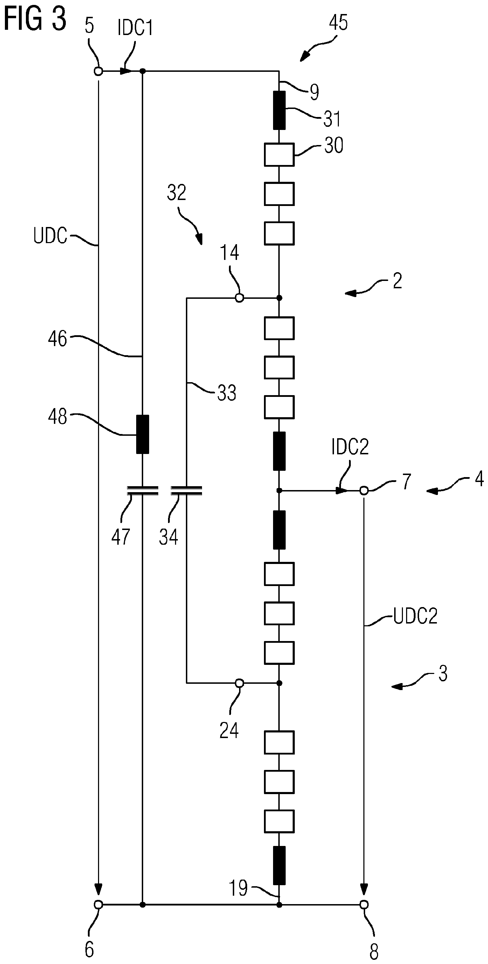

In Figur 3 ist ein Gleichspannungswandler 45 dargestellt, bei dem der erste Teilumrichter 2 und der zweite Teilumrichter 3 einphasig ausgeführt sind. Die Funktionsweise des Gleichspannungswandlers 45 entspricht im Wesentlichen derjenigen des Gleichspannungswandlers 1 der Figur 1. Im Unterschied zum Gleichspannungswandler 1 umfasst der Gleichspannungswandler 45 einen Parallelzweig 46, der sich zwischen den oberspannungsseitigen Gleichspannungspolen 5, 6 parallel zu der Umrichterreihenschaltung 4 erstreckt. In dem Parallelzweig 46 sind ein Kondensator 46 sowie eine Induktivität 47 angeordnet. Der Kondensator 46 und die Induktivität 47 bilden einen sogenannten LC-Saugkreis aus, der auf die Frequenz des in den Teilumrichtern 2, 3 erzeugten Wechselspannungsanteils UAC abgestimmt ist. Auf diese Weise können der oberspannungsseitige Gleichstrom IDC1 und der unterspannungsseitige Gleichstrom IDC2 weitgehend frei von Wechselstromanteilen gehalten werden.

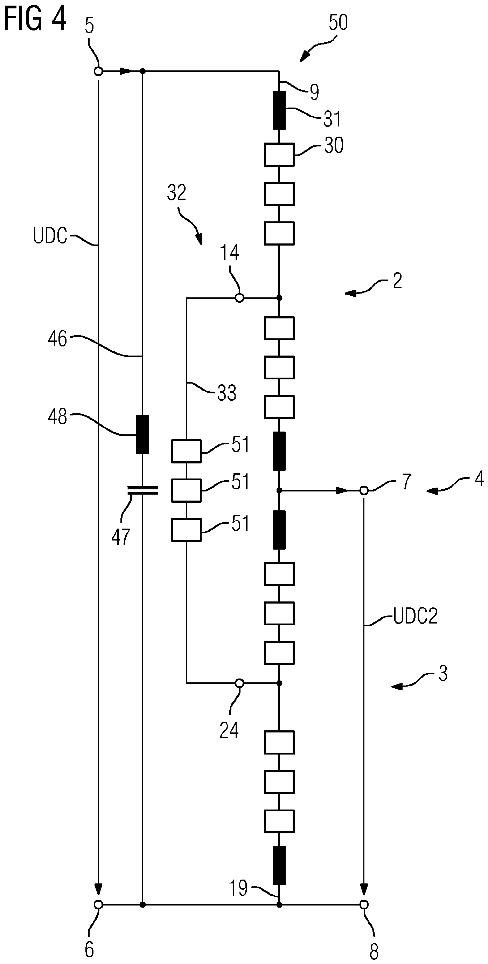

Figur 4 zeigt einen Gleichspannungswandler 50. Der Gleichspannungswandler 50 weist die zum Gleichspannungswandler 45 gleichartig aufgebaute Umrichterreihenschaltung 4 auf. Im Unterschied zum Gleichspannungswandler 45 der Figur 3 umfasst der Verbindungszweig 33 der Kopplungseinrichtung 32 eine Reihenschaltung von zweipoligen Kopplungsmodulen 51. Die Kopplungsmodule 51 sind als Halbbrückenschaltungen gemäß der Darstellung der Figur 8 ausgebildet. Mit Hilfe einer nicht grafisch dargestellten Steuerung der Leistungshalbleiter der Kopplungsmodule 51 kann an der Reihenschaltung der Kopplungsmodule 51 beispielsweise eine Spannung erzeugt werden, die einer Überlagerung einer Gleichspannung und der Wechselspannung UAC entspricht. Die Reihenschaltung der Kopplungsmodule 51 entspricht demnach einer steuerbaren Kapazität.

In der Darstellung der Figur 4 umfasst der Verbindungszweig 33 aus Übersichtlichkeitsgründen drei Kopplungsmodule 51. Es ist jedoch möglich und sinnvoll, die Anzahl der Kopplungsmodule 51 an die jeweilige Anwendung anzupassen, so dass diese beispielsweise durchaus zehn oder fünfzig übersteigen kann.

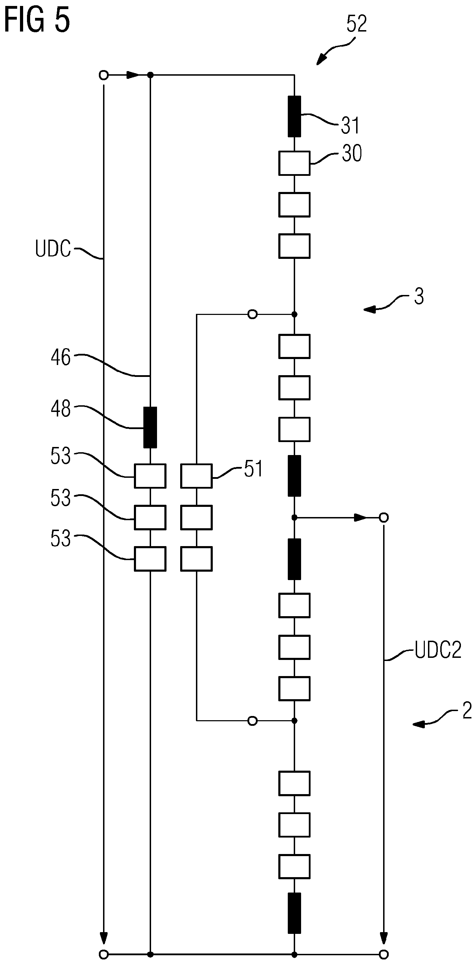

Figur 5 zeigt einen Gleichspannungswandler 52, dessen Aufbau und Funktionsweise den Gleichspannungswandlern 45 und 50 der

Figuren 3 und 4 entspricht, mit dem Unterschied, dass im Parallelzweig 46 eine Reihenschaltung von Konvertermodulen 53 angeordnet ist. Die Konvertermodule 53 sind im gezeigten Ausführungsbeispiel alle gleichartig als Halbbrückenschaltungen gemäß der Figur 8 realisiert. Gemäß dem Ausführungsbeispiel ist der LC-Saugkreis im Parallelzweig 46 ebenfalls steuerbar.

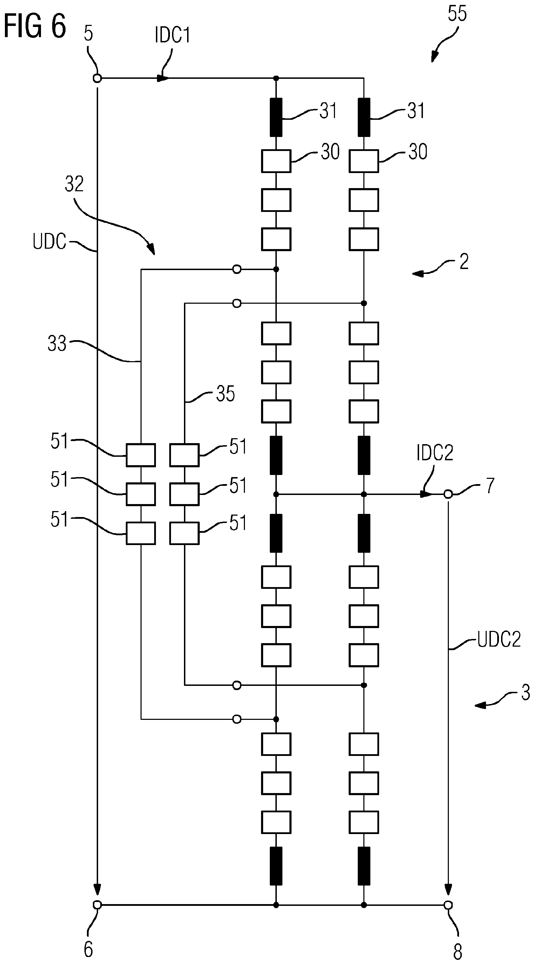

Figur 6 zeigt einen Gleichspannungswandler 55, der sich von dem Gleichspannungswandler 1 lediglich dadurch unterscheidet, dass im ersten Verbindungszweig 33 und im zweiten Verbindungszweig 35 der Kopplungseinrichtung 32 jeweils eine Reihenschaltung der Kopplungsmodule 51 angeordnet ist.

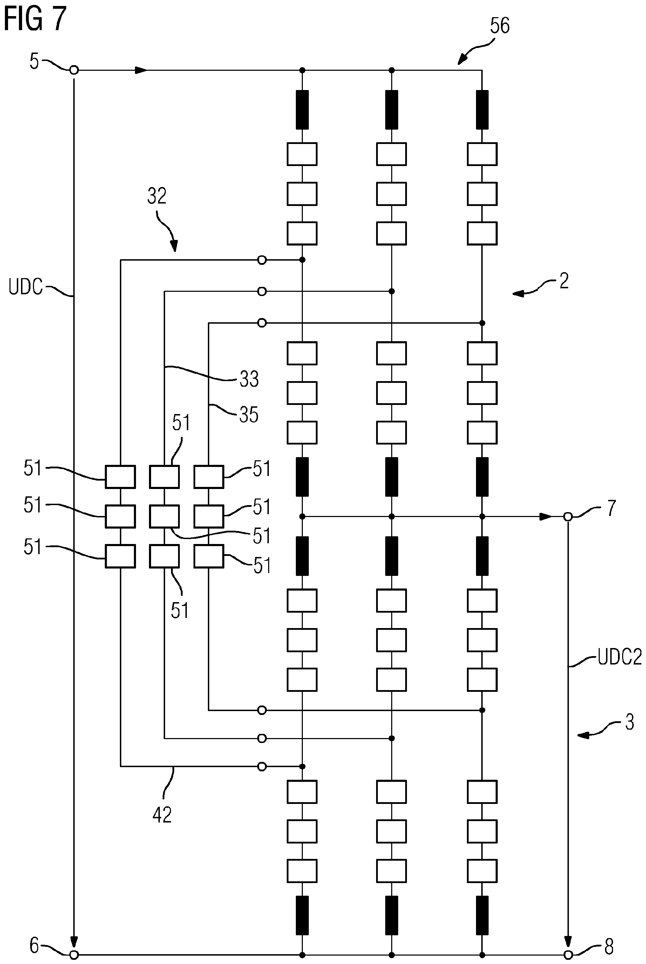

In Figur 7 ist ein Gleichspannungswandler 56 dargestellt, dessen Aufbau dem Gleichspannungswandler 37 der Figur 2 entspricht, mit dem Unterschied, dass die Verbindungszweige 33, 35 und 42 der Kopplungseinrichtung 32 jeweils eine Reihenschaltung der Kopplungsmodule 51 umfassen.

Die Kopplungsmodule 51 der Gleichspannungswandler 55 und 56 sind alle in Form von Halbbrückenschaltungen realisiert.

In den nachfolgenden Figuren 8, 9 und 10 sind unterschiedliche Ausführungsbeispiele der Submodule 31 der Teilumrichter 2, 3, die auch als Konvertermodule 53 und/oder Kopplungsmodule 51 eingesetzt werden können.

Figur 8 zeigt im Einzelnen ein Submodul in Form einer Halbbrückenschaltung 101. Die Halbbrückenschaltung 101 weist zwei Anschlüsse X1 und X2 auf. Der Anschluss X1 kann beispielsweise die Halbbrückenschaltung 101 mit dem Anschluss X2 einer weiteren Halbbrückenschaltung verbinden, so dass eine Reihenschaltung der Submodule gebildet wird.

Die Halbbrückenschaltung 101 umfasst einen ersten Halbleiterschalter 102 in Form eines Bipolartransistors mit isolierter Gate-Elektrode (IGBT), dem eine Freilaufdiode 103 antiparallel geschaltet ist. Ferner umfasst die Halbbrückenschaltung 101 einen zweiten Halbleiterschalter 104 in Form eines IGBT, dem eine Freilaufdiode 105 antiparallel geschaltet ist. Die Durchlassrichtung der beiden Halbleiterschalter 102 und 104 ist gleichgerichtet. Der erste Anschluss X1 ist an einem Potenzialpunkt 113 zwischen den beiden Halbleiterschaltern 102 und 104 angeordnet. Der zweite Anschluss X2 ist mit dem Emitter des zweiten Halbleiterschalters 104 verbunden.

Parallel zu den beiden Halbleiterschaltern 102, 104 ist ein Energiespeicher in Form eines Hochleistungskondensators 106 angeordnet. Durch eine geeignete Ansteuerung der Halbleiterschalter 102, 104 kann, bei einer durch einen Pfeil 107 angedeuteten Betriebsstromrichtung, der Kondensator 106 zugeschaltet oder überbrückt werden, so dass an den Anschlüssen X1, X2 entweder die am Kondensator 106 abfallende Spannung oder eine Spannung null abfällt.

Ein Beispiel eines Submoduls in Form einer Vollbrückenschaltung 108 ist in Figur 9 schematisch dargestellt. Die Vollbrückenschaltung 108 weist einen ersten Halbleiterschalter 102 in Form eines IGBT, dem eine Freilaufdiode 103 antiparallel geschaltet ist sowie einen zweiten Halbleiterschalter 104 in Form eines IGBT, dem eine Freilaufdiode 105 antiparallel geschaltet ist. Die Durchlassrichtung der beiden Halbleiterschalter 102 und 104 ist gleichgerichtet. Ferner umfasst die Vollbrückenschaltung 108 einen dritten Halbleiterschalter 109 in Form eines IGBT, dem eine Freilaufdiode 110 antiparallel geschaltet ist sowie einen vierten Halbleiterschalter 111 in Form eines IGBT, dem eine Freilaufdiode 112 antiparallel geschaltet ist. Die Durchlassrichtung der beiden Halbleiterschalter 109 und 111 ist gleichgerichtet. Die Halbleiterschalter 102 und 104 mit ihnen zugeordneten Freilaufdioden 103, 105 bilden somit eine Reihenschaltung, die einer durch die Halbleiterschalter 109, 111 und die zugeordneten Freilaufdioden 110 und 112 gebildeten Reihenschaltung parallel geschaltet ist. Ein Energiespeicher in Form eines Hochleistungskondensators 106 ist parallel zu den beiden Reihenschaltungen angeordnet. Der erste Anschluss X1 ist an einem Potenzialpunkt 113 zwischen den Halbleiterschaltern 102, 104 angeordnet, der zweite Anschluss X2 ist an einem Potenzialpunkt 114 zwischen den Halbleiterschaltern 109, 111 angeordnet.

Durch eine geeignete Steuerung der Leistungshalbleiter 102, 104, 109 und 111 kann die an den Anschlüssen X1, X2 abfallende Spannung erzeugt werden, die der am Kondensator 106 abfallenden Spannung, der am Kondensator 106 abfallenden Spannung jedoch mit entgegengesetzter Polarität oder der Spannung null entspricht.

Figur 10 zeigt ein Ausführungsbeispiel eines Submoduls in Form eines sogenannten Clamp-Double-Submodule (CDSM) 115. Ein solches Submodul ist aus der DE 10 2009 057 288 A1 bekannt. Das CDSM 115 zeichnet sich insbesondere dadurch aus, dass bei geeigneter Ansteuerung der Halbleiterschalter 102, 104, 109, 111, 116 des CDSM 115 ein Strom zwischen den beiden Anschlüssen X1 und X2 immer über wenigstens einen der beiden Energiespeicher 106, 117 erfolgen muss.

Bezüglich weiterer Details des Aufbaus und der Funktionsweise des CDSM 115 wird hiermit auf die zuvor genannte Druckschrift DE 10 2009 057 288 A1 verwiesen.

## Patentansprüche

1. Gleichspannungswandler (1) mit einem ersten Teilumrichter (2) und einem zweiten Teilumrichter (3), die miteinander unter Ausbildung einer Umrichterreihenschaltung (4) in Reihe geschaltet sind, wobei die Umrichterreihenschaltung (4) sich zwischen einem ersten und einem zweiten oberspannungsseitigen Gleichspannungspol (5, 6) erstreckt und der zweite Teilumrichter (3) sich zwischen einem ersten und einem zweiten unterspannungsseitigen Gleichspannungspol (7, 8) erstreckt, wobei ein Wechselspannungsanschluss (14) des ersten Teilumrichters und ein Wechselspannungsanschluss (24) des zweiten Teilumrichters über eine Kopplungseinrichtung (32) verbunden sind, wobei die Kopplungseinrichtung (32) eine rein kapazitive Kopplung der Teilumrichter (2, 3) bereitstellt, **dadurch gekennz eichne**t , dass die Kopplungseinrichtung (32) wenigstens eine Reihenschaltung zweipoliger Kopplungsmodule (51) umfasst, wobei jedes Kopplungsmodul (51) wenigstens einen Leistungshalbleiterschalter (102, 104) und einen Kondensator (106) umfasst, wobei mittels einer Steuerungseinrichtung zur Ansteuerung der Leistungshalbleiterschalter die Kondensatoren der Kopplungsmodule zugeschaltet oder überbrückt werden können.

2. Gleichspannungswandler (50) nach Anspruch 1,
wobei die Kopplungsmodule (51) als Halbbrückenschaltungen (101) realisiert sind.

3. Gleichspannungswandler (50) nach einem der vorangehenden Ansprüche, wobei der Gleichspannungswandler (50) ferner einen Parallelzweig (46) umfasst, der sich zwischen dem ersten und dem zweiten oberspannungsseitigen Gleichspannungspol (5, 6) parallel zu der Umrichterreihenschaltung (4) erstreckt, und in dem ein Kondensator (47) angeordnet ist.

4. Gleichspannungswandler (52) nach Anspruch 3,
wobei der Parallelzweig (46) eine Reihenschaltung zweipoliger Konvertermodule (53) aufweist, die jeweils wenigstens einen Halbleiterschalter (102, 104) und einen Kondensator (106) umfassen.

5. Gleichspannungswandler (1) nach einem der vorangehenden Ansprüche, wobei
- der erste Teilumrichter (2) wenigstens eine erste Umrichterphase (9) aufweist, wobei die erste Umrichterphase (9) des ersten Teilumrichters (2) einen ersten Phasenzweig (11) und einen zweiten Phasenzweig (12) umfasst, wobei
- der erste Phasenzweig (11) des ersten Teilumrichters (2) sich zwischen dem ersten oberspannungsseitigen Gleichspannungspol (5) und dem Wechselspannungsanschluss (14) des ersten Teilumrichters (2) erstreckt, und
- der zweite Phasenzweig (12) des ersten Teilumrichters (2) sich zwischen dem Wechselspannungsanschluss (14) des ersten Teilumrichters und dem ersten unterspannungsseitigen Gleichspannungspol (6) erstreckt, und wobei
- der zweite Teilumrichter (13) wenigstens eine erste Umrichterphase (19) aufweist, wobei die erste Umrichterphase (19) des zweiten Teilumrichters (3) einen ersten Phasenzweig (21) und einen zweiten Phasenzweig (22) umfasst, wobei
- der erste Phasenzweig (21) des zweiten Teilumrichters (3) sich zwischen dem ersten unterspannungsseitigen Gleichspannungspol (7) und dem Wechselspannungsanschluss (24) des zweiten Teilumrichters (3) erstreckt, und
- der zweite Phasenzweig (22) des zweiten Teilumrichters (3) sich zwischen dem Wechselspannungsanschluss (24) des zweiten Teilumrichters (3) und dem zweiten unterspannungsseitigen Gleichspannungspol (8) erstreckt.

6. Gleichspannungswandler (1) nach Anspruch 5, wobei der Wechselspannungsanschluss (14) des ersten Teilumrichters (2) ein erster Wechselspannungsanschluss (14) des ersten Teilumrichters (2) ist und der Wechselspannungsanschluss (24) des zweiten Teilumrichters (3) ein erster Wechselspannungsanschluss (24) des zweiten Teilumrichters (3) ist, wobei
- der erste Teilumrichter (2) ferner eine zweite Umrichterphase (10) aufweist, wobei die zweite Umrichterphase (10) des ersten Teilumrichters (2) einen dritten Phasenzweig (15) und einen vierten Phasenzweig (16) umfasst, wobei
- der dritte Phasenzweig (15) des ersten Teilumrichters (2) sich zwischen dem ersten oberspannungsseitigen Gleichspannungspol (5) und einem zweiten Wechselspannungsanschluss (18) des ersten Teilumrichters (2) erstreckt, und
- der vierte Phasenzweig (16) des ersten Teilumrichters (2) sich zwischen dem zweiten Wechselspannungsanschluss (18) des ersten Teilumrichters (2) und dem ersten unterspannungsseitigen Gleichspannungspol (7) erstreckt, und wobei
- der zweite Teilumrichter (3) eine zweite Umrichterphase (20) aufweist, wobei die zweite Umrichterphase (20) des zweiten Teilumrichters (3) einen dritten Phasenzweig (25) und einen vierten Phasenzweig (26) umfasst, wobei
- der dritte Phasenzweig (25) des zweiten Teilumrichters (3) sich zwischen dem ersten unterspannungsseitigen Gleichspannungspol (7) und einem zweiten Wechselspannungsanschluss (28) des zweiten Teilumrichters (3) erstreckt, und
- der vierte Phasenzweig (26) des zweiten Teilumrichters (3) sich zwischen dem zweiten Wechselspannungsanschluss (28) des zweiten Teilumrichters (3) und dem zweiten unterspannungsseitigen Gleichspannungspol (8) erstreckt, wobei
die Kopplungseinrichtung (32) einen zweiten Verbindungszweig (35) mit einer weiteren Reihenschaltung der Kopplungsmodule (51) umfasst, der den zweiten Wechselspannungsanschluss (18) des ersten Teilumrichters (2) mit dem zweiten Wechselspannungsanschluss (28) des zweiten Teilumrichters (3) verbindet.

7. Gleichspannungswandler (1) nach einem der Ansprüche 5 oder 6, wobei die Umrichterphasen (9, 19) der Teilumrichter (2, 3) jeweils eine Reihenschaltung zweipoliger Submodule (30) aufweisen, die jeweils einen Leistungshalbleiterschalter (102, 104) und einen Energiespeicher (106) umfassen.

8. Gleichspannungswandler (1) nach Anspruch 8, wobei die Submodule (30) der Teilumrichter (2, 3) als Vollbrückenschaltungen (108) oder Halbbrückenschaltungen (101) realisiert sind.

9. Gleichspannungswandler (1) nach einem der vorangehenden Ansprüche, wobei dem ersten Teilumrichter (2) ein Modulationsindex (M) zugeordnet ist, der einem maximalen Modulationsindex (Mmax) des ersten Teilumrichters (2) entspricht.

10. Gleichspannungswandler (1) nach einem der vorangehenden Ansprüche, wobei dem zweiten Teilumrichter (3) ein Modulationsindex (M) zugeordnet ist, der einem maximalen Modulationsindex (Mmax) des zweiten Teilumrichters (3) entspricht.

11. Gleichspannungswandler (1) nach einem der vorangehenden Ansprüche, wobei ein Übersetzungsverhältnis (Ü) einer oberspannungsseitigen Gleichspannung (UDC) zu einer unterseitigen Gleichspannung (UDC2) zwischen 1,8 und 2,2 beträgt.

## Claims

1. DC-to-DC converter (1) having a first sub-converter (2) and a second sub-converter (3) that are connected in series with one another, forming a converter series circuit (4), wherein the converter series circuit (4) extends between a first and a second high voltage-side DC voltage pole (5, 6) and the second sub-converter (3) extends between a first and a second low voltage-side DC voltage pole (7, 8), wherein an AC voltage terminal (14) of the first sub-converter and an AC voltage terminal (24) of the second sub-converter are connected via a coupling device (32), wherein the coupling device (32) provides purely capacitive coupling of the sub-converters (2, 3) ,
**characterized in that**
the coupling device (32) comprises at least one series circuit of two-pole coupling modules (51), wherein each coupling module (51) comprises at least a power semiconductor switch (102, 104) and a capacitor (106), wherein the capacitors of the coupling modules are able to be activated or to be bridged by way of a controller for driving the power semiconductor switches.

2. DC-to-DC converter (50) according to Claim 1,
wherein the coupling modules (51) are in the form of half-bridge circuits (101).

3. DC-to-DC converter (50) according to either of the preceding claims, wherein the DC-to-DC converter (50) furthermore comprises a parallel branch (46) that extends between the first and the second high voltage-side DC voltage pole (5, 6) in parallel with the converter series circuit (4) and in which a capacitor (47) is arranged.

4. DC-to-DC converter (52) according to Claim 3,
wherein the parallel branch (46) has a series circuit of two-pole converter modules (53) that each comprise at least a semiconductor switch (102, 104) and a capacitor (106).

5. DC-to-DC converter (1) according to one of the preceding claims, wherein
- the first sub-converter (2) has at least a first converter phase (9), wherein the first converter phase (9) of the first sub-converter (2) comprises a first phase branch (11) and a second phase branch (12), wherein
- the first phase branch (11) of the first sub-converter (2) extends between the first high voltage-side DC voltage pole (5) and the AC voltage terminal (14) of the first sub-converter (2), and
- the second phase branch (12) of the first sub-converter (2) extends between the AC voltage terminal (14) of the first sub-converter and the first low voltage-side DC voltage pole (6), and wherein
- the second sub-converter (13) has at least a first converter phase (19), wherein the first converter phase (19) of the second sub-converter (3) comprises a first phase branch (21) and a second phase branch (22), wherein
- the first phase branch (21) of the second sub-converter (3) extends between the first low voltage-side DC voltage pole (7) and the AC voltage terminal (24) of the second sub-converter (3), and
- the second phase branch (22) of the second sub-converter (3) extends between the AC voltage terminal (24) of the second sub-converter (3) and the second low voltage-side DC voltage pole (8).

6. DC-to-DC converter (1) according to Claim 5, wherein the AC voltage terminal (14) of the first sub-converter (2) is a first AC voltage terminal (14) of the first sub-converter (2) and the AC voltage terminal (24) of the second sub-converter (3) is a first AC voltage terminal (24) of the second sub-converter (3), wherein
- the first sub-converter (2) furthermore has a second converter phase (10), wherein the second converter phase (10) of the first sub-converter (2) comprises a third phase branch (15) and a fourth phase branch (16), wherein
- the third phase branch (15) of the first sub-converter (2) extends between the first high voltage-side DC voltage pole (5) and a second AC voltage terminal (18) of the first sub-converter (2) , and
- the fourth phase branch (16) of the first sub-converter (2) extends between the second AC voltage terminal (18) of the first sub-converter (2) and the first low voltage-side DC voltage pole (7), and wherein
- the second sub-converter (13) has a second converter phase (20), wherein the second converter phase (20) of the second sub-converter (3) comprises a third phase branch (25) and a fourth phase branch (26), wherein
- the third phase branch (25) of the second sub-converter (3) extends between the first low voltage-side DC voltage pole (7) and a second AC voltage terminal (28) of the second sub-converter (3), and
- the fourth phase branch (26) of the second sub-converter (3) extends between the second AC voltage terminal (28) of the second sub-converter (3) and the second low voltage-side DC voltage pole (8), wherein
the coupling device (32) comprises a second connection branch (35) having a further series circuit of the coupling modules (51) that connects the second AC voltage terminal (18) of the first sub-converter (2) to the second AC voltage terminal (28) of the second sub-converter (3).

7. DC-to-DC converter (1) according to either of Claims 5 and 6, wherein the converter phases (9, 19) of the sub-converters (2, 3) each have a series circuit of two-pole submodules (30) that each comprise a power semiconductor switch (102, 104) and an energy store (106).

8. DC-to-DC converter (1) according to Claim 7, wherein the submodules (30) of the sub-converters (2, 3) are in the form of full-bridge circuits (108) or half-bridge circuits (101).

9. DC-to-DC converter (1) according to one of the preceding claims, wherein the first sub-converter (2) is assigned a modulation index (M) that corresponds to a maximum modulation index (Mmax) of the first sub-converter (2).

10. DC-to-DC converter (1) according to one of the preceding claims, wherein the second sub-converter (3) is assigned a modulation index (M) that corresponds to a maximum modulation index (Mmax) of the second sub-converter (3).

11. DC-to-DC converter (1) according to one of the preceding claims, wherein a transformation ratio (Ü) between a high voltage-side DC voltage (UDC) a low voltage-side DC voltage (UDC2) is between 1.8 and 2.2.

## Revendications

1. Convertisseur (1) de tension continue, comprenant un premier onduleur (2) partiel et un deuxième onduleur (3) partiel, qui sont montés en série l'un avec l'autre en formant un circuit (4) série d'onduleurs, le circuit (4) série d'onduleurs s'étendant entre un premier et un deuxième pôles (5, 6) de tension continue du côté de la tension haute et le deuxième onduleur (3) partiel s'étendant entre un premier et un deuxième pôles (7, 8) de tension continue du côté de la tension basse, une borne (14) de tension alternative du premier onduleur partiel et une borne (24) de tension alternative du deuxième onduleur partiel étant reliées par un dispositif (32) de couplage, le dispositif (32) de couplage procurant un couplage purement capacitif des onduleurs (2, 3) partiels,
**caractérisé en ce que** le dispositif (32) de couplage comprend au moins un circuit série de modules (51) de couplage bipolaire, chaque module (51) de couplage comprenant au moins un interrupteur (102, 104) de puissance à semi-conducteur et un condensateur (106), dans lequel, au moyen d'un dispositif de commande pour commander l'interrupteur de puissance à semi-conducteur, les condensateurs des modules de couplage peuvent être mis en circuit ou shuntés.

2. Convertisseur (50) de tension continue suivant la revendication 1,
dans lequel les modules (51) de couplage sont réalisés sous la forme de circuits (101) en demi-pont.

3. Convertisseur (50) de tension continue suivant l'une des revendications précédentes, dans lequel le convertisseur (50) de tension continue comprend en outre une branche (46) parallèle, qui s'étend parallèlement au circuit (4) série d'onduleurs entre le premier et le deuxième pôles (5, 6) de tension continue du côté de la tension haute et dans laquelle est monté un condensateur (47).

4. Convertisseur (52) de tension continue suivant la revendication 3,
dans lequel la branche (46) parallèle a un circuit série de modules (53) de convertisseur bipolaires, qui comprennent chacun au moins un interrupteur (102, 104) à semi-conducteur et un condensateur (106).

5. Convertisseur (1) de tension continue suivant l'une des revendications précédentes, dans lequel
- le premier onduleur (2) partiel a au moins une première phase (9) d'onduleur, la première phase (9) d'onduleur du premier onduleur (2) partiel comprend une première branche (11) de phase et une deuxième branche (12) de phase, dans lequel
- la première branche (11) de phase du premier onduleur (2) partiel s'étend entre le premier pôle (5) de tension continue du côté de la tension haute et la borne (14) de tension alternative du premier onduleur (2) partiel, et
- la deuxième branche (12) de phase du premier onduleur (2) partiel s'étend entre la borne (14) de tension alternative du premier onduleur partiel et le premier pôle (6) de tension continue du côté de la tension basse, et dans lequel
- le deuxième onduleur (3) partiel a au moins une première phase (19) d'onduleur, la première phase (19) d'onduleur du deuxième onduleur (3) partiel comprend une première branche (21) de phase et une deuxième branche (22) de phase, dans lequel
- la première branche (21) de phase du deuxième onduleur (3) partiel s'étend entre le premier pôle (7) de tension continue du côté de la tension basse et la borne (24) de tension alternative du deuxième onduleur (3) partiel, et
- la deuxième branche (22) de phase du deuxième onduleur (3) partiel s'étend entre la borne (24) de tension alternative du deuxième onduleur (3) partiel et le deuxième pôle (8) de tension continue du côté de la tension basse.

6. Convertisseur (1) suivant la revendication 5, dans lequel la borne (14) de tension alternative du premier onduleur (2) partiel est une première borne (14) de tension alternative du premier onduleur (2) partiel et la borne (24) de tension alternative du deuxième onduleur (3) partiel est une première borne (24) de tension alternative du deuxième onduleur (3) partiel, dans lequel
- le premier onduleur (2) partiel a en outre une deuxième phase (10) d'onduleur, la deuxième phase (10) d'onduleur du premier onduleur (2) partiel comprend une troisième branche (15) de phase et une quatrième branche (16) de phase, dans lequel
- la troisième branche (15) de phase du premier onduleur (2) partiel s'étend entre le premier pôle (5) de tension continue du côté de la tension haute et une deuxième borne (18) de tension alternative du premier onduleur (2) partiel, et
- la quatrième branche (16) de phase du premier onduleur (2) partiel s'étend entre la deuxième borne (18) de tension alternative du premier onduleur (2) partiel et le premier pôle (7) de tension continue du côté de la tension basse, et dans lequel
- le deuxième onduleur (3) partiel a une deuxième phase (20) d'onduleur, la deuxième phase (20) d'onduleur du deuxième onduleur (3) partiel comprend une troisième branche (25) de phase et une quatrième branche (26) de phase, dans lequel
- la troisième branche (25) de phase du deuxième onduleur (3) partiel s'étend entre le premier pôle (7) de tension continue du côté de la tension basse et une deuxième borne (28) de tension alternative du deuxième onduleur (3) partiel, et
- la quatrième branche (26) de phase du deuxième onduleur (3) partiel s'étend entre la deuxième borne (28) de tension alternative du deuxième onduleur (3) partiel et le deuxième pôle (8) de tension continue du côté de la tension basse, dans lequel
le dispositif (32) de couplage comprend une deuxième branche (35) de liaison ayant un autre circuit série des modules (51) de couplage, qui relie la deuxième borne (18) de tension alternative du premier onduleur (2) partiel à la deuxième borne (28) de tension alternative du deuxième onduleur (3) partiel.

7. Convertisseur (1) suivant l'une des revendications 5 ou 6, dans lequel les phases (9, 19) d'onduleur des onduleurs (2, 3) partiels ont chacune un circuit série de sous-modules (30) bipolaires, qui comprennent chacun un interrupteur (102, 104) de puissance à semi-conducteur et un accumulateur (106) d'énergie.

8. Convertisseur (1) suivant la revendication 7, dans lequel les sous-modules (30) des onduleurs (2, 3) partiels sont réalisés en circuit (108) en pont complet ou en circuit (101) en demi-pont.

9. Convertisseur (1) suivant l'une des revendications précédentes, dans lequel au premier onduleur (2) partiel est associé un indice (M) de modulation, qui correspond à un indice (Mmax) de modulation maximum du premier onduleur (2) partiel.

10. Convertisseur (1) suivant l'une des revendications précédentes, dans lequel au deuxième onduleur (3) partiel est associé un indice (M) de modulation, qui correspond à un indice (Mmax) de modulation maximum du deuxième onduleur (3) partiel.

11. Convertisseur (1) suivant l'une des revendications précédentes, dans lequel un rapport (Ü) de démultiplication d'une tension (UDC) continue du côté de la tension haute à une tension (UDC2) continue du côté de la tension basse est compris entre 1,8 et 2,2,
